# EUROPEAN PATENT APPLICATION

(11) **EP 2 862 798 A2**
(43) Date of publication of application: **22.04.2015**
(21) Application number: 14181531.6
(22) Date of filing: 20.08.2014
(51) Int. Cl.: B64C 9/00

(54) **An aircraft structure and method of manufacture**

(30) Priority: 29.08.2013 GB 201315341
(71) Applicant: Airbus Operations Limited, Bristol BS34 7PA (GB)
(72) Inventor: Axford, Timothy, BRISTOL, Bristol BS99 7AR (GB)
(74) Representative: Teesdale, Emily Catherine

(57) **Abstract**

The present invention concerns an aircraft structure (401, 402) for being moveably mounted externally on an aircraft (400), the aircraft structure being an aerodynamic structure comprising a structural component 100 providing structural strength and stiffness to the aircraft structure, the structural component comprising an integral fixing (116, 117) for moveably mounting the aerodynamic structure externally to the aircraft, and an integral fixing (115) for attachment to an actuator for actuating movement of the aircraft structure with respect to the aircraft, and an aerodynamic surface component (200, 300) attached to one side of the structural component, the aerodynamic surface component providing an aerodynamic external surface of the aircraft structure. The invention also concerns a method of manufacture.

## Description

### Background of the Invention

The present invention concerns aircraft structures and methods of manufacture. More particularly, but not exclusively, this invention concerns an aircraft structure for being moveably mounted externally on an aircraft, the aircraft structure being an aerodynamic structure. The invention also concerns an aircraft with plurality of such aircraft structures and a method of manufacture of the aircraft structure(s).

Moveable aerodynamic aircraft structures, such as spoilers, flaps, slats, ailerons, elevators and rudders, are particularly expensive to manufacture. This is especially the case for spoilers, where each spoiler on an aircraft has a slightly different shape, requiring different tooling to manufacture each spoiler and interface components. This results in a very large number of bespoke parts required. For example, a typical single-aisle aircraft may have 10 spoilers (5 spoilers on each wing). Due to this large number of bespoke parts, the manufacture process is often largely manual to minimise the initial tooling required. This increases the recurring cost of manufacturing the parts. These spoilers comprise a honeycomb structure, sandwiched between two carbon fibre sheets.

Whilst consideration has been given to using the same size and shape of spoilers, it has been found that this overly compromises the aerodynamic performance.

The present invention seeks to mitigate the above-mentioned problems. Alternatively or additionally, the present invention seeks to provide an improved aircraft structure and/or method of manufacture.

### Summary of the Invention

The present invention provides, according to a first aspect, a method of manufacturing first and second aircraft aerodynamic structures, the method comprising the steps of manufacturing a first structural component and a second structural component, wherein the first structural component is manufactured using substantially the same sized and shaped tooling as that of a second structural component, manufacturing a first aerodynamic surface component and a second aerodynamic surface component, wherein the first aerodynamic surface component is manufactured using differently sized or shaped tooling to that of a second aerodynamic surface component, attaching the first structural component to the first aerodynamic surface component to form the first aircraft aerodynamic structure, and attaching the second structural component to the second aerodynamic surface component to form the second aircraft aerodynamic structure.

In the context of the invention, an aerodynamic aircraft structure is one with an aerodynamic surface that is designed to move to affect the aerodynamic loading experienced by the aircraft to affect its velocity (speed and/or direction). Such an aerodynamic aircraft structure is usually mounted on the wings or tailplane of the aircraft.

In this method, the structural components can be made with the same tooling and, for example, can be used for each spoiler on an aircraft. Having a separate component providing the aerodynamic surface means that the aerodynamic performance is not compromised as a different aerodynamic surface component can be used for each spoiler.

The present invention provides, according to a second aspect, an aircraft structure for being moveably mounted externally on an aircraft, the aircraft structure being an aerodynamic structure comprising a structural component providing structural strength and stiffness to the aircraft structure, the structural component comprising an integral fixing for moveably mounting the aerodynamic structure externally to the aircraft, and an integral fixing for attachment to an actuator for actuating movement of the aircraft structure with respect to the aircraft, and an aerodynamic surface component attached to one side of the structural component, the aerodynamic surface component providing an aerodynamic external surface of the aircraft structure.

In the context of the invention, an aerodynamic external surface is a surface that is exposed to an airflow during flight when deployed.

In the context of the invention, the term integral means that it is permanently the same part, once formed (for example, cured). It does not mean a part fixed using a mechanical fastener, for example.

Having a structural component providing strength and stiffness to the aircraft structure allows the same structural component to be used for each of a plurality of aircraft structures. For example, the same size and shape structural component (and therefore can be made with the same tooling) can be used for each spoiler on an aircraft. Having a separate component providing the aerodynamic surface means that the aerodynamic performance is not compromised as a different aerodynamic surface component can be used for each spoiler.

Preferably, the structural component provides the vast majority of the structural strength and stiffness of the aerodynamic structure and wherein the structural strength and stiffness provided by the aerodynamic surface component is minimal.

Preferably, the aircraft structure is a spoiler, flap, slat, aileron, elevator or rudder. More preferably, the aircraft structure is a spoiler.

Preferably, the aerodynamic surface component is attached to the structural component by locking features. These locking features may be in the form of "snap and click" biased tabs. alternatively, or additionally, the aerodynamic surface component may be attached to the structural component with traditional mechanical fasteners, such as bolts or rivets.

Preferably, the area of the aerodynamic surface component is larger than that of the structural component so that the structural component is substantially covered by the aerodynamic surface component. This means that the structural component requires no particular aerodynamic properties.

Preferably, the area of the structural component is substantially defined by a frame structure with internal stiffening elements.

Preferably, the aerodynamic surface component has a mating surface opposite to the aerodynamic external surface, the mating surface having an interface pattern on it corresponding to the frame structure of the structural component. This allows the aerodynamic surface component to be easily lined up with the structural component during manufacture. The interface pattern may be co-cured or co-moulded to the aerodynamic surface component.

Preferably, the mounting fixing is external to the frame and extends past the aerodynamic surface component such that it is not covered by the aerodynamic surface component. This allows the aircraft structure to be mounted to an aircraft without affecting the aerodynamic surface.

Preferably, the actuator fixing of the structural component is an internal part of the frame structure. This allows the force imparted by the actuator to be evenly distributed about the structural component, making it more structurally efficient.

Preferably, the structural component also comprises a sheet element on the other side of the frame structure to the aerodynamic surface component. This provides additional stiffness to the structural component.

Alternatively, a second aerodynamic surface component may be put on the other side of the structural component. This results in an aircraft structure with two opposite aerodynamic surfaces. For example, this could be used for an aircraft structure that is a rudder.

Preferably, the structural component and/or the aerodynamic surface component is made from synthetic composite material, such as carbon or glass fibre composite material. Alternatively, the structural component and/or the aerodynamic surface component may be metallic. For example, the structural component may be cast or forged and the aerodynamic surface component may be machined sheet metal.

According to a third aspect of the invention, there is also provided an aircraft structure for being moveably mounted externally on an aircraft, the aircraft structure being an aerodynamic structure comprising a sheet component, the sheet component being made from a synthetic composite material comprising uni-directional fibres in a resin matrix, and a non-sheet component, the non-sheet component being made from a synthetic composite material comprising chopped long fibres in a resin matrix.

Having the sheet component being made from a synthetic composite material comprising uni-directional fibres in a resin matrix, and the non-sheet component being made from a synthetic composite material comprising chopped long fibres in a resin matrix, allows a low cost manufacturing process, without compromising the structural performance of the components. The chopped long fibres can easily be manipulated into complicated moulding shapes of the non-sheet component, whilst uni-directional fibres can be easily used to form a sheet component.

Preferably, the sheet component and the non-sheet component are bonded together, preferably co-cured together.

Preferably, the sheet component is the aerodynamic surface component or the sheet element mentioned above in relation to the second aspect of the invention.

Preferably, the non-sheet component is the structural component mentioned above in relation to the second aspect of the invention.

Preferably, the non-sheet component is a frame structure with internal stiffening elements.

Preferably, the structure is for being pivotally mounted externally on the aircraft.

Preferably, the structure is a spoiler, slat, flap, elevator, aileron or rudder of an aircraft.

According to a fourth aspect of the invention there is also provided a plurality of aircraft structures as described above, wherein the structural components are substantially the same size and shape and wherein the aerodynamic surface components are substantially differently sized or shaped. Having structural components substantially the same size and shape allows them to be made from a single, same mould. Having aerodynamic surface components substantially differently sized or shaped allows them to be made to any required aerodynamic shape, without compromising on aerodynamic performance.

According to a fifth aspect of the invention there is also provided a plurality of aircraft structures as described above wherein the non-sheet components are substantially the same size and shape and wherein the sheet components are substantially differently sized or shaped. Having non-sheet components substantially the same size and shape allows them to be made from a single, same mould. Having sheet components substantially differently sized or shaped allows them to be made to any required aerodynamic shape

According to a sixth aspect of the invention there is also provided an aircraft comprising a plurality of aircraft structures as described above.

According to a seventh aspect of the invention there is also provided a method of manufacturing a plurality of aircraft structures or an aircraft as described above, the method comprising the steps of manufacturing a plurality of structural components using substantially the same sized and shaped tooling, and manufacturing a plurality of aerodynamic surface components using differently sized or shaped tooling.

According to a eighth aspect of the invention there is also provided a method of manufacturing a plurality of aircraft structures or an aircraft as described above, the method comprising the steps of manufacturing a plurality of non-sheet components using substantially the same sized and shaped tooling, and manufacturing a plurality of sheet components using differently sized or shaped tooling.

According to a ninth aspect of the invention there is also provided a method of manufacturing an aerodynamic aircraft structure for being moveably mounted externally on an aircraft, the method comprising the steps of manufacturing a structural component comprising an integral fixing for moveably mounting the aerodynamic structure externally to the aircraft, and an integral fixing for attachment to an actuator for actuating movement of the aircraft structure with respect to the aircraft, and manufacturing an aerodynamic surface component, and attaching it to one side of the structural component.

According to an tenth aspect of the invention there is also provided a method of manufacturing an aerodynamic aircraft structure for being moveably mounted externally on an aircraft, the method comprising the steps of manufacturing a sheet component from a synthetic composite material comprising uni-directional fibres in a resin matrix, and manufacturing a non-sheet component from a synthetic composite material comprising chopped long fibres in a resin matrix.

It will of course be appreciated that features described in relation to one aspect of the present invention may be incorporated into other aspects of the present invention. For example, the methods of the invention may incorporate any of the features described with reference to the apparatus of the invention and *vice versa.*

### Description of the Drawings

Embodiments of the present invention will now be described by way of example only with reference to the accompanying schematic drawings of which:
- Figure 1: shows a perspective view of a common structural module for part of an aircraft structure according to a first or second embodiment of the invention;
- Figure 2a: shows a perspective view of a surface component for part of an aircraft structure according to a first embodiment of the invention;
- Figure 2b: shows a perspective view of a surface component for part of an aircraft structure according to a second embodiment of the invention; and
- Figure 3a: shows a side view of the surface component of Figure 2a;
- Figure 3b: shows a side view of the surface component of Figure 2b;
- Figure 4: shows a side view of a connection between one of the surface components and the common structural module; and
- Figure 5: shows a plan view of an aircraft comprising various aircraft structures.

### Detailed Description

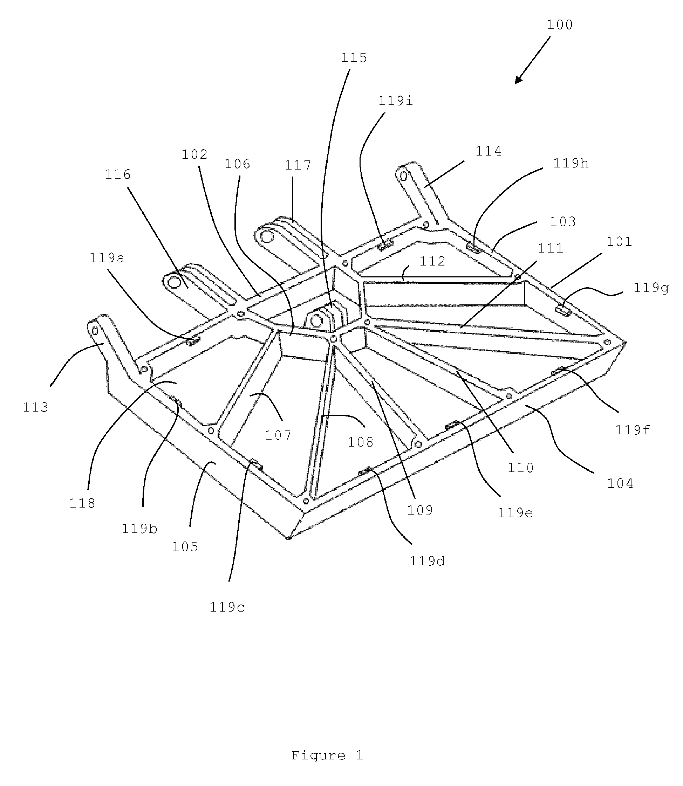

Figure 1 shows a perspective view of a common structural module 100 for part of a spoiler. The common structural module 100 is intended to be used for all spoilers on an aircraft, with each spoiler having a different surface component (described later) attached to the common structural module 100.

The common structural module 100 comprises a rectangular box frame 101 with two short sides 103, 105 and two long sides 102, 104. Along the middle of one of the long sides 102 is a semi-circular frame 106 inside the box frame 101.

There are six struts 107, 108, 109, 110, 111, 112 radiating out from the semi-circular frame 106 to the insides of the sides 103, 104, 105 of the box frame 101. First strut 107 extends to approximately halfway along short side 105, second strut 108 extends to the corner of short side 105 and long side 104, third strut 109 extends to approximately a quarter of the way along the length of long side 104 from the corner with short side 105, fourth strut 110 extends to approximately three quarters of the way along the length of long side 104 from the corner with short side 105 (in other words a quarter of the way along the length of long side 104 from the corner with short side 103), fifth strut 111 extends to the corner of short side 103 and long side 104 and sixth strut 112 extends to approximately halfway along short side 103.

There are various attachment tabs on the upper surface of the common structural module 100, for attaching to a surface component, as follows: Attachment tab 119a halfway between the corner of the short side 105 and long side 102 and the intersection of one side of the semi-circular frame 106 and the long side 102, attachment tab 119b halfway between the corner of the short side 105 and long side 102 and the intersection of short side 105 with strut 107, attachment tab 119c halfway between the intersection of short side 105 with strut 107 and the corner of the short side 105 and long side 104, attachment tab 119d halfway between the corner of the short side 105 and long side 104 and the intersection of long side 104 with strut 109, attachment tab 119e halfway between the intersection of long side 104 with strut 109 and strut 110, attachment tab 119f halfway between the corner of the short side 103 and long side 104 and the intersection of long side 104 with strut 110, attachment tab 119g halfway between the corner of the short side 103 and long side 104 and the intersection of short side 103 with strut 112, attachment tab 119h halfway between the corner of the short side 103 and long side 102 and the intersection of short side 103 with strut 112, and attachment tab 119i halfway between the corner of the short side 103 and long side 102 and the intersection of the other side of the semi-circular frame 106 and the long side 102.

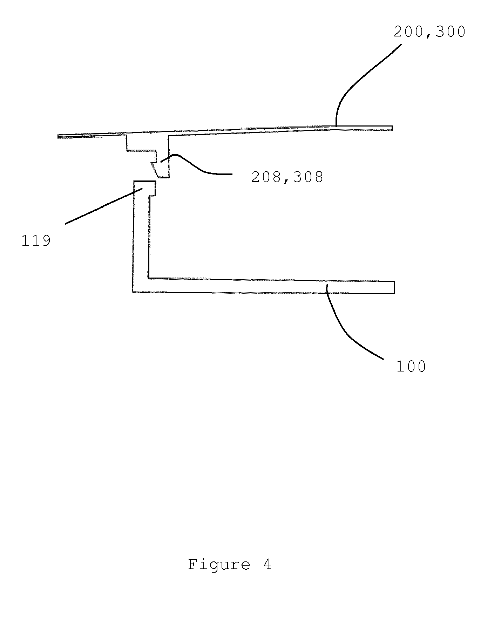

Each of these attachment tabs 119 has an inwardly facing protrusion for locking with a corresponding locking tab on a surface component (as can be seen in Figure 4).

Inside the semi-circular frame, on the side furthest away from long side 104 is an actuator fixing 115 in the form of two lugs with a hole through them. This allows an actuator (not shown) to be pivotally mounted to the common structural module 100.

External to the box frame 101, on the external side of long side 104, adjacent to the intersection of the semi-circular frame 106 are two mounting fixings 116, 117. These fixings 116, 117 each comprise two lugs with a hole through them. These allow the common structural module 100 to be pivotally mounted to an aircraft wing (not shown).

There are two drop links 113, 114; one located at each external corner of the long side 104. These drop links 113, 114 lock the ends of the spoiler in place when stowed. This ensures that the spoiler bends with the aircraft wing when stowed.

Finally, on the underside of the common structural module 100 is a sheet 118 extending across the area of the box frame 101. This sheet 118 gives the common structural module 100 structural strength and stiffness.

Hence, the common structural module 100 comprises a non-sheet component (the drop links 113, 114, actuator fixing 115, mounting fixings 116, 117, box frame 101, semi-circular frame 106, six struts 107, 108, 109, 110, 111, 112) and attachment tabs 119) and a sheet component 118.

The non-sheet component is made from carbon fibre chopped long fibres (also known as discreet long fibres) in a resin matrix. The fibres are randomly orientated and the relatively short nature of the fibres (30 to 100mm long) provides internal stiffness whilst still having high formability, where lay-up is relatively challenging. Instead of having to lay-up, co-stamping or injection co-moulding can be used to form the non-sheet component.

The sheet component 118 is made from uni-directional carbon fibres in a resin matrix. Having uni-directional fibres makes the sheet component 118 easier to manufacture as high formability is not required for the simple sheet shaped component, that is flat and relatively simple to lay-up.

During manufacture of the common structural module 100, the non-sheet component and the sheet component are layed up and are co-cured together to form an integral module 100.

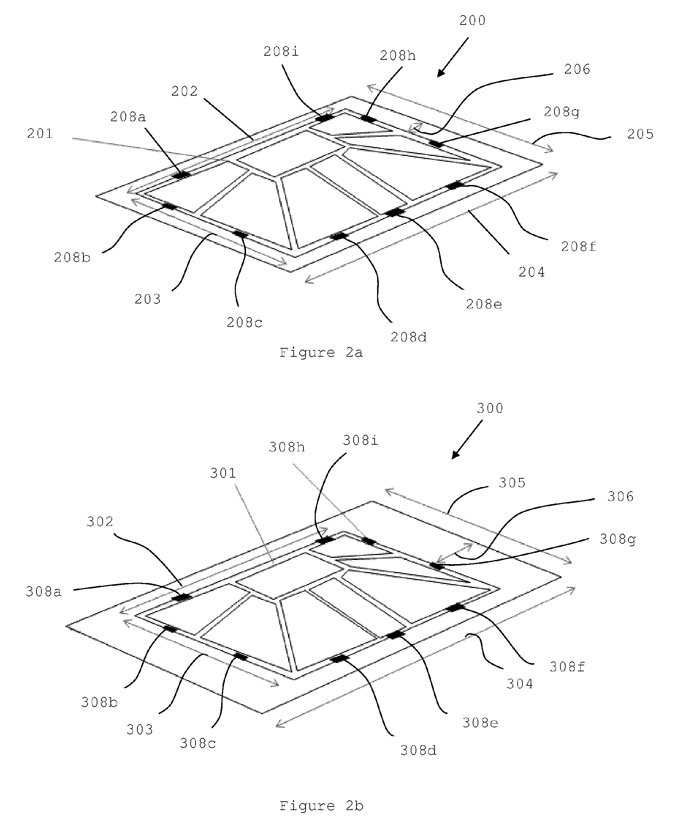

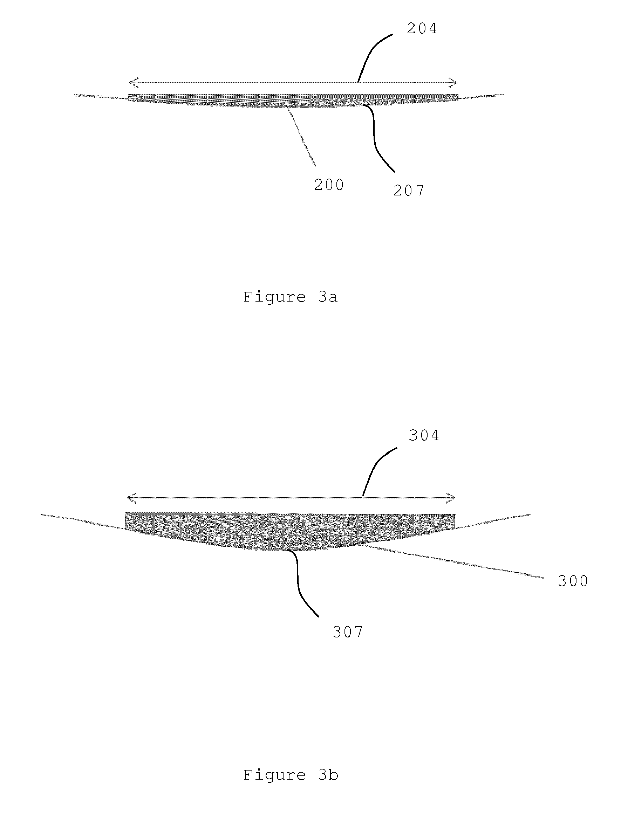

Figures 2a and 3a show views of a surface component 200 for attaching to the common structural module 100 to form a first spoiler.

The surface component 200 comprises a contoured sheet with an external width 205 and external length 204. The sheet has a contoured thickness for providing a desired external aerodynamic surface 207 of the spoiler, as can be seen in Figure 3a. The contoured thickness accommodates differences in external profile and curvature desired for the spoiler.

The surface component, on its internal side, has an interface pattern 201 corresponding to the box frame 101 and struts 107-112 of the common structural module 100. This interface pattern has a width of 203 and a length of 202. This leaves extra width on either side of the pattern of 206.

The interface pattern also comprises locking tabs 208a to 208i corresponding to the position of attachment tabs 119a to 119i on the common structural module 100. The locking tabs 208 and attachment tabs 119 lock in place using a resilient barb, as shown in Figure 4.

The main part of the thickness of the surface component 200 is made from uni-directional carbon fibres in a resin matrix. Having uni-directional fibres makes the surface component 200 easier to manufacture as high formability is not required for the simple sheet shaped component. The interface pattern 201 is added by co-stamping or co-moulding, preferably from chopped long fibre material or from a toughened resin, compatible with the underlying composite.

Figures 2b and 3b show views of a surface component 300 for attaching to the common structural module 100 to form a second spoiler.

The surface component 300 comprises a contoured sheet with an external width 305 and external length 304. These dimensions 304, 305 are bigger than the equivalent dimensions of the surface component 200. The sheet has a contoured thickness for providing a desired external aerodynamic surface 307 of the spoiler, as can be seen in Figure 3b. The contoured thickness accommodates differences in external profile and curvature desired for the spoiler. This thickness, again, is bigger than the equivalent thickness of surface component 200.

The surface component, on its internal side, has an interface pattern 301 (the same as interface pattern 201 on surface component 200) corresponding to the box frame 101 and struts 107-112 of the common structural module 100. This interface pattern has a width of 303 and a length of 302 (the same as width 203 and length of 202 of the pattern on surface component 200). This leaves extra width on either side of the pattern of 306. This extra width is larger than the extra width 206 on the surface component 200.

The interface pattern also comprises locking tabs 308a to 308i corresponding to the position of attachment tabs 119a to 119i on the common structural module 100. The locking tabs 308 and attachment tabs 119 lock in place using a resilient barb, as shown in Figure 4.

The main part of the thickness of the surface component 300 is made from uni-directional carbon fibres in a resin matrix. Having uni-directional fibres makes the surface component 300 easier to manufacture as high formability is not required for the simple sheet shaped component. The interface pattern 301 is added by co-stamping or co-moulding, preferably from chopped long fibre material or from a toughened resin, compatible with the underlying composite.

During manufacture, the common structural module 100 is manufactured using the same tooling to produce the desired number of substantially identical common structural modules 100. Surface components 200, 300 (and others not described here) are also produced and attached to each common structural module 100 by locking tabs 208, 308 biased into the attachment tabs 119. The locking tabs 208, 308 are co-stamped or co-moulded features on the interface patterns 201, 301. Having locking tabs 208, 308 removes the need for assembly fixtures and reduces the number of traditional mechanical fasteners required and therefore, the cost of manufacturing the spoilers.

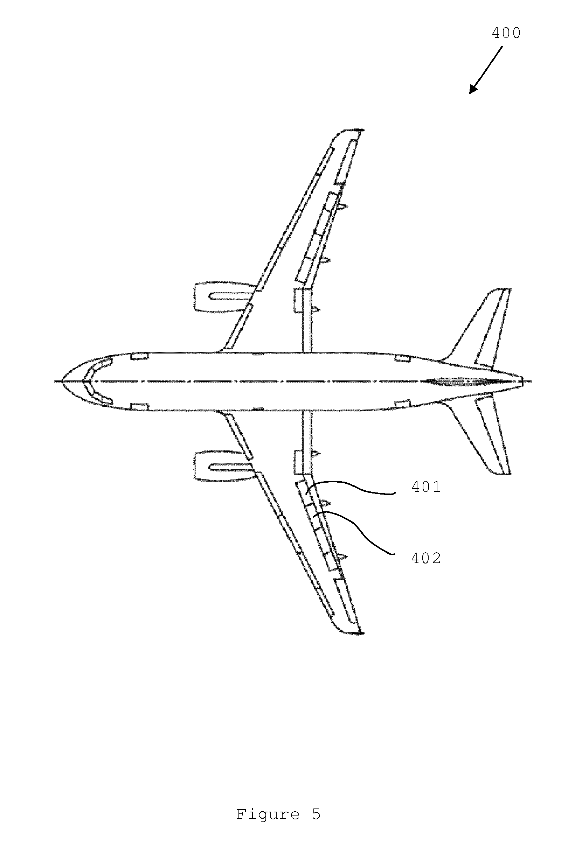

The attachment of a surface component 200, 300 to a common structural module 100 forms complete spoilers 401, 402. These spoilers 401, 402 are then attached to an aircraft wing using mounting fixings 116, 117 and attached to an actuator by actuator fixing 115. They are also attached to the wing via drop links 113, 114. Figure 5 shows a plan view of an aircraft 400 comprising various aircraft structures, including spoilers 401 (comprising a surface component 200 attached to a common structural module 100) and 402 (comprising a surface component 300 attached to a common structural module 100).

During use, the spoilers 401, 402 pivot with respect to the aircraft wing via pivotal mounting fixing 116, 117. They are caused to move by an actuator attached to the actuator fixing 115.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In the above description, the common structural module 100 (comprising sheet and non-sheet components) and surface components 200, 300 are manufactured from carbon fibre composite materials. This could be thermoset or thermoplastic carbon fibre reinforced plastic. As an alternative, thermoset or thermoplastic glass fibre reinforced plastic could be used for one or more of these components. As a further alternative, one or more of these components may instead be metallic, for example, made of aluminium alloy.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of manufacturing first and second aircraft aerodynamic structures, the method comprising the steps of:
- manufacturing a first structural component and a second structural component, wherein the first structural component is manufactured using substantially the same sized and shaped tooling as that of a second structural component,
- manufacturing a first aerodynamic surface component and a second aerodynamic surface component, wherein the first aerodynamic surface component is manufactured using differently sized or shaped tooling to that of a second aerodynamic surface component,
- attaching the first structural component to the first aerodynamic surface component to form the first aircraft aerodynamic structure, and
- attaching the second structural component to the second aerodynamic surface component to form the second aircraft aerodynamic structure.

2. An aircraft structure for being moveably mounted externally on an aircraft, the aircraft structure being an aerodynamic structure comprising:
- a structural component providing structural strength and stiffness to the aircraft structure, the structural component comprising:
∘ an integral fixing for moveably mounting the aerodynamic structure externally to the aircraft, and
∘ an integral fixing for attachment to an actuator for actuating movement of the aircraft structure with respect to the aircraft,
and
- an aerodynamic surface component attached to one side of the structural component, the aerodynamic surface component providing an aerodynamic external surface of the aircraft structure.

3. An aircraft structure as claimed in claim 2, wherein the aerodynamic surface component has a mating surface opposite to the aerodynamic external surface, the mating surface having an interface pattern on it corresponding to a frame structure of the structural component.

4. An aircraft structure for being moveably mounted externally on an aircraft, the aircraft structure being an aerodynamic structure comprising:
- a sheet component, the sheet component being made from a synthetic composite material comprising uni-directional fibres in a resin matrix, and
- a non-sheet component, the non-sheet component being made from a synthetic composite material comprising chopped long fibres in a resin matrix.

5. An aircraft structure as claimed in claim 4, wherein the sheet component and the non-sheet component are bonded together, preferably co-cured together.

6. An aircraft structure as claimed in claim 4, wherein the sheet component is the aerodynamic surface component of claim 1 or a sheet element on the other side of the frame structure to the aerodynamic surface component.

7. An aircraft structure as claimed in claim 4, wherein the non-sheet component is the structural component of claim 2.

8. An aircraft structure as claimed in claim 2, wherein the structure is for being pivotally mounted externally on the aircraft.

9. A plurality of aircraft structures as claimed in claim 2, wherein the structural components are substantially the same size and shape and wherein the aerodynamic surface components are substantially differently sized or shaped.

10. A plurality of aircraft structures as claimed in claim 4, wherein the non-sheet components are substantially the same size and shape and wherein the sheet components are substantially differently sized or shaped.

11. An aircraft comprising a plurality of aircraft structures as claimed in claim 9 or claim 10.

12. A method of manufacturing a plurality of aircraft structures or an aircraft as claimed in claim 9, the method comprising the steps of:
- manufacturing a plurality of structural components using substantially the same sized and shaped tooling, and
- manufacturing a plurality of aerodynamic surface components using differently sized or shaped tooling.

13. A method of manufacturing a plurality of aircraft structures or an aircraft as claimed in claim 10, the method comprising the steps of:
- manufacturing a plurality of non-sheet components using substantially the same sized and shaped tooling, and
- manufacturing a plurality of sheet components using differently sized or shaped tooling.

14. A method of manufacturing an aerodynamic aircraft structure for being moveably mounted externally on an aircraft, the method comprising the steps of:
- manufacturing a structural component comprising an integral fixing for moveably mounting the aerodynamic structure externally to the aircraft, and an integral fixing for attachment to an actuator for actuating movement of the aircraft structure with respect to the aircraft, and
- manufacturing an aerodynamic surface component, and attaching it to one side of the structural component.

15. A method of manufacturing an aerodynamic aircraft structure for being moveably mounted externally on an aircraft, the method comprising the steps of:
- manufacturing a sheet component from a synthetic composite material comprising uni-directional fibres in a resin matrix, and
- manufacturing a non-sheet component from a synthetic composite material comprising chopped long fibres in a resin matrix.
